# EUROPÄISCHE PATENTSCHRIFT

(11) **EP 1 208 258 B1**
(45) Veröffentlichungstag und Bekanntmachung des Hinweises auf die Patenterteilung: **15.10.2003**
(21) Anmeldenummer: 00965773.5
(22) Anmeldetag: 16.08.2000
(51) Int. Cl.: D06C 3/02, F16G 13/06

(54) **ROLLENKETTE**
ROLLER CHAIN
CHAINE A ROULEAUX

(30) Priorität: 31.08.1999 DE 19941306
(43) Veröffentlichungstag der Anmeldung: 29.05.2002
(73) Patentinhaber: A. Monforts Textilmaschinen GmbH & Co, 41238 Mönchengladbach (DE)
(72) Erfinder: MINGERS, Konrad, D-41352 Korschenbroich (DE)
(74) Vertreter: von Creytz, Dietrich, Dipl.-Phys.
(86) Internationale Anmeldenummer: DE0002808
(87) Internationale Veröffentlichungsnummer: WO01016420

(56) Entgegenhaltungen:
- EP-A- 0 400 375
- DE-A- 3 529 683
- DE-A- 3 913 933

## Beschreibung

Die Erfindung betrifft eine Rollenkette zum kontinuierlichen Führen und/oder Breitstrecken einer textilen Stoffbahn in einer Stoffbahnspannmaschine (sogenannter Spannrahmen) mit verbunden über Kettengelenke abwechselnd aufeinanderfolgenden Innen- und Außengliedern,
a) wobei jedes Innenglied aus zwei Innenlaschen sowie zwei die Laschen miteinander verbindenden Hülsen und jedes Außenglied aus zwei Außenlaschen sowie zwei die Außenlaschen miteinander verbindenden Bolzen besteht.
b) wobei jede Hülse koaxial drehbar auf dem zugehörigen Bolzen gelagert ist,
c) wobei koaxial außen auf der Hülse eine Laufrolle als Außenring eines über einen durch das Bolzeninnere führenden Schmierkanal zu versorgenden Kugellagers vorgesehen ist,
d) wobei das Kugellager einen mit der Hülse gekoppelten Innenring und je einen axial anliegenden, koaxialen Dichtring besitzt, und
e) wobei die Innenlaschen über einen den Dichtring kräftemäßig überbrückenden Abstandhalter axial gegen den Kugellager-Innenring unverdrehbar auf die Hülse aufgepreßt sind.

Eine Rollenkette mit diesen Merkmalen gehört zum internen Stand der Technik der Anmelderin. Die Erfindung betrifft insbesondere eine Ausgestaltung des oben unter d genannten Dichtrings der Rollenkette.

In EP 0 400 375 B2 wird eine Rollenkette beschrieben, deren Kugellager-Schmierkanal unmittelbar durch eine Innenlasche in das Kugellagerinnere führt. Im Bekannten liegt der Schmierkanal etwa parallel zu der Bolzenachse außerhalb derselben. Durch diesen Aufbau wird das Nachschmieren der Kette vereinfacht, weil der Weg des Nachschmiermittels von der Einpreßstelle bis zum eigentlichen Lager im wesentlichen geradeaus geht. Die Einpreßstelle auf der Außenseite der jeweiligen Innenlasche befindet sich jedoch in der Nähe des Bolzens. Axial außerhalb der Innenlasche sitzt auf dem Bolzen die Außenlasche. Deren freies Ende ragt bei manchen Kettenkonstruktionen (in Kettenlängsrichtung) so weit über die Innenlasche, daß der für die Einpreßstelle mögliche Bereich im wesentlichen durch die Außenlasche überdeckt wird. Zum Nachschmieren müßte dann die Außenlasche entweder verkürzt oder mit einer Bohrung ausgestattet werden. Dieser Aufwand ist in der Regel nicht zu vertreten.

Gegebenenfalls verwendet man herkömmliche Schmiermittelwege, die beispielsweise beschrieben werden in DE 35 29 683 A1. Hiernach werden die Kugellager der Kettenglieder vom Innern des jeweiligen Bolzens her geschmiert. Zu diesem Zweck wird in jedem Kettenbolzen eine axiale Längsbohrung mit einem radialen Abzweig zum Kugellager vorgesehen. Die Hülse und der Innenring des Kugellagers besitzen an einer Stelle eine Öffnung, die beim Schmieren mit dem genannten radialen Abzweig zur Deckung zu bringen ist. Der radiale Abzweig der Bolzenlängsbohrung und der Durchgang der Hülse müssen also gefluchtet werden. Wenn die Hülse fest mit dem zugehörigen Innenlaschenpaar und der Bolzen fest mit dem angrenzenden Außenlaschenpaar verbunden wird, läßt sich ein entsprechender Durchgangskanal konstruktiv vorgeben, derart, daß beispielsweise bei geradeaus gestreckter Kette die Bohrungen und Durchgänge von der Einpreßstelle bis zum Kugellagerinnern gefluchtet sind.

Bei modernen Rollenketten der eingangs genannten Art werden den Laschen, die an jedem Längsende eine Bohrung besitzen, mit ihrer Bohrung auf die jeweilige Hülse in Richtung auf das Kugellager aufgepreßt und gegebenenfalls vernietet. Bei diesem Preßvorgang wird die Kraft unmittelbar übertragen auf den an die Hülse angrenzenden Innenring des Kugellagers. Wenn auf dem Kugeln und Schmierfett enthaltenden Innenraum des Kugellagers ein Dichtring aufgelegt werden soll, der die Preß- und Nietkraft nicht aufnehmen kann oder soll, wird in der Praxis zwischen dem jeweiligen axialen Längsende des Kugellagerinnenrings und der Innenlasche ein Ring aus Metall, z.B. aus Bronze oder Stahl, eingefügt, der in der Funktion als Abstandhalter den zum Unterbringen des Dichtrings erforderlichen kräftefreien Raum schafft. In dieser Ausgestaltung folgen also radial ausgehend von der Hülse der Abstandhalterring und der Dichtring aufeinander. Der Abstandhalterring dient dazu, die beim Aufpressen und Nieten der Innenlasche auf der Hülse auftretenden axialen Kräfte auf den Kugellager-Innenring zu übertragen. Ein Zweck des Dichtrings ist es, das Kugellagerinnere gegen einen ungewollten Schmiermittel-Verlust im wesentlichen zu schützen.

Wenn man bei einer Kettenkonstruktion der soeben beschriebenen Art mit auf die jeweilige Hülse aufgenieteten Innenlaschen den vom Bolzeninnern ausgehenden Schmierkanal in das Kugellagerinnere führen wollte, müßte der Weg durch den Abstandhalterring gehen, das heißt es wären in dem Ring entsprechende Lücken erforderlich. Bei den dabei in Frage kommenden Dimensionen würde das eine Teilung des Abstandhalterrings erfordern. Beim Verbinden von Hülse und Innenlasche durch Pressen und Nieten ist es aber schwierig, eine im Abstandhalterring vorgesehene Lücke genau mit einer in der Hülse vorgesehenen Schmiermittelbohrung zur Deckung zu bringen.

Der Erfindung liegt die Aufgabe zugrunde, den Abstandhalterring so zu verbessern, daß die Probleme beim Fluchten eines Nach-Schmier-Durchgangs mit dem radialen Abzweig des Bolzens und dem Hülsendurchgang überwunden werden und trotzdem eine Übertragung der beim Aufpressen und gegebenenfalls Nieten der Innenlasche auf die Hülse ausgeübten Kräfte auf den Kugellager-Innenring gewährleistet wird, ohne den Dichtring in seiner Funktion zu beeinträchtigen.

Die erfindungsgemäße Lösung besteht für die eingangs genannte Rollenkette darin, daß der Dichtring im wesentlichen aus Kunststoff besteht und unverdrehbar mit der angrenzenden Innenlasche gekoppelt ist, daß der Abstandhalter in Form einzelner in der Bolzenumfangsrichtung annähernd gleich verteilter, metallischer Einlagen in den Dichtring integriert ist, daß jede Einlage axial annähernd durch den Dichtring hindurchreicht, wobei der in der Ringebene gemessene Gesamtquerschnitt aller Einlagen klein gegen die Ringfläche ist und daß die dem Kugellager zugewandte Dichtringfläche mindestens eine Schmierrinne aufweist, die den Bolzenschmierkanal und ein damit zur Deckung gebrachtes Schmierloch der Hülse mit dem Kugellagerinnern - als Schmiermitteldurchgang - verbindet. Verbesserungen und weitere Ausgestaltungen der Erfindung werden in den Unteransprüchen angegeben.

Vorzugsweise sollen die Einlagen eine Härte in der Größenordnung derjenigen des Materials von Hülse und Innenlasche besitzen. Insbesondere können die Einlagen stahlhart sein. Sie können als Kugeln oder Zylinder aber auch als Würfel bzw. Quader in die Einlage integriert sein. Wesentlich ist vor allem, daß jede einzelne Einlage in axialer Richtung (bezogen auf den Dichtring) mindestens ebenso dick wie der (gegebenenfalls leicht gepreßte) Dichtring selbst ist; letzteres gilt speziell für den Bereich des Dichtrings, der axial zwischen der Längskante des Kugellager-Innenrings und der Innenlasche liegt. Bei Versuchen hat sich herausgestellt, daß vier oder mehr im Dichtring im Radius des Kugellagerinnenrings etwa gleich verteilte Einlagen zur Übertragung der beim Pressen und gegebenenfalls Nieten auftretenden Kräfte ausreichen. Es sollen mindestens drei Einlagen vorgesehen werden, um eine definierte Lage des Dichtrings bei dem Preß- und Nietvorgang zu gewährleisten.

Durch die Erfindung wird erreicht, daß die beim Pressen und Nieten aktuelle axiale Kraftverbindung zu sichern ist, ohne die quer dazu, das heißt radial, verlaufende Schmierverbindung zu schädigen. Zwischen den einzelnen metallischen Einlagen des Dichtrings bleibt nämlich ausreichend Platz für einen Schmierkanal bzw. eine Schmierrinne, die die Verbindung zwischen dem radialen Abzweig des Bolzenlängskanals und dem Kugellagerinnern bildet. In der Praxis kann es die Montage vereinfachen, wenn ein Dichtring mehrere, z.B. zwei diametral einander gegenüberliegende, Schmierrinnen auf seiner dem Kugellager zugewandten Innenseite besitzt. Zu beachten ist dabei, daß die einzelne Schmierrinne am Dichtring - gesehen radial in Bezug auf die (Bolzen-)Achse - nur in dem Ringbereich erforderlich ist, in dem die Abstandhalter-Einlagen installiert sind; das heißt die Schmiermittelrinnen enden auf dem Weg radial nach außen an einer Barriere, die dafür sorgt, daß normalerweise Schmiermittel nicht verloren geht, sondern aus der Rinne bzw. an der Barriere unmittelbar in das Kugellagerinnere geleitet wird.

Anhand der schematischen Darstellung eines Ausführungsbeispiels werden einige Einzelheiten der Erfindung erläutert. Es zeigen:
- **Fig. 1**: einen Teil einer Rollenkette in einem Schnitt senkrecht zur Laufrollenachse;
- **Fig. 2**: eine Draufsicht auf einen erfindungsgemäßen Dichtring; und
- **Fig. 3**: einen Schnitt längs der Linie III-III von Fig. 2.

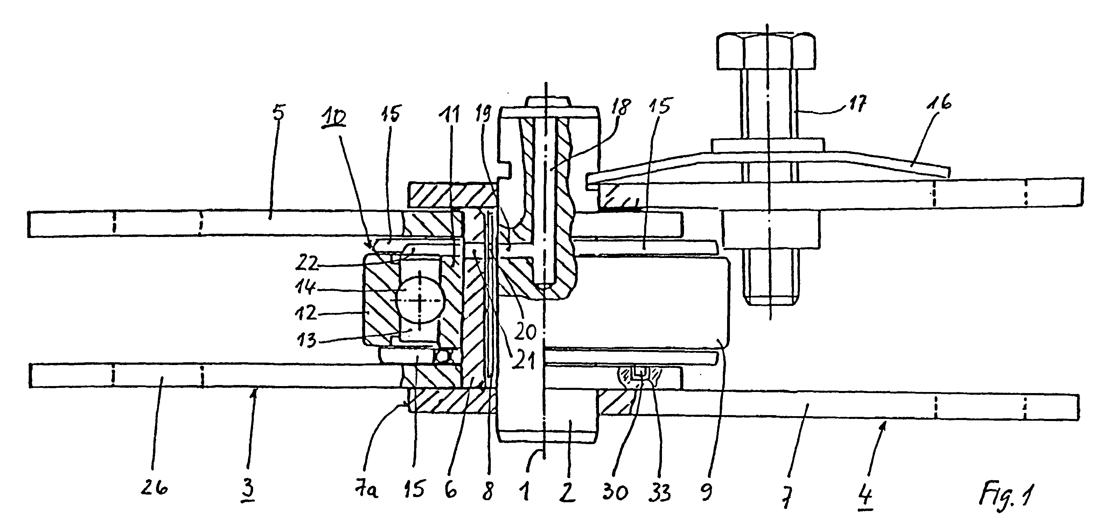

In Fig. 1 wird ein Teil einer Rollenkette in einem Schnitt senkrecht zur Laufrollenachse bzw. Längsachse 1 eines Bolzens 2 schematisch dargestellt. Die Rollenkette besteht aus insgesamt mit 3 bezeichneten Innengliedern und insgesamt mit 4 bezeichneten Außengliedern. Jedes Innenglied 3 besteht aus zwei Innenlaschen 5 sowie aus zwei die Laschen 5 miteinander verbindenden Hülsen 6. Jedes Außenglied 5 besteht aus zwei Außenlaschen 7 sowie aus zwei die Außenlaschen 7 miteinander verbindenden Bolzen 2. Jede Hülse 6 wird koaxial drehbar auf dem zugehörigen Bolzen 2 gelagert. Die erforderliche Relativdrehbarkeit von Bolzen 2 und Hülse 6 wird beispielsweise gewährleistet durch eine zwischengesetzte koaxiale Gleitbuchse 8, z.B. aus Polytetrafluorethylen-Gewebe. Außen auf der Hülse 6 wird eine koaxiale Laufrolle 9 in einem von außen zu schmierenden Kugellager 10 drehbar gelagert. Die freien Enden 7a der Außenlaschen 7 reichen deutlich über den Bolzen 2 hinaus und schließen zwischen sich den Bereich des Innenglieds 3 zum Teil ein, in welchem nach EP 0 400 375 (s.o.) ein Nachschmierkanal zum Kugellager 10 vorgesehen wird.

Der Innenring 11 des Kugellagers 10 wird unverdrehbar mit der Hülse 6 verbunden. Der Außenring 12 des Kugellagers 10 nimmt die Laufrolle 9 auf oder bildet sie. Das Kugellagerinnere 13 (zwischen Innenring 11 und Außenring 12) enthält die Kugeln 14 und sonst im wesentlichen Schmiermittel. Das Kugellagerinnere 13 wird mit Hilfe von Dichtringen 15 abgedeckt, unter anderem um zu verhindern, das Schmiermittel austritt.

Ein zwischen Außenlaschen 7 und Innenlaschen 5 am Bolzenumfang für eine freie Beweglichkeit erforderliches Spiel wird mit Hilfe eines Federblatts 16 aufgefangen. An der Rollenkette, vorzugsweise an den Außenlaschen 7, werden (nicht gezeichnete) Nadel- oder Kluppenglieder zum Festhalten eines Stoffbahnrandes mit Hilfe einer durch einen Schraubbolzen 17 symbolisierten Vorrichtung befestigt.

Die in dem Kugellager 10 drehbare Laufrolle 9 läuft bei Betrieb an einer Schiene am Längsrand des Behandlungsraums der Spannmaschine ab. Bei Transportgeschwindigkeiten von z.B. 50 bis 200 m pro Minute und Rollendurchmessern von beispielsweise 4 cm ergeben sich erhebliche Umdrehungsgeschwindigkeiten der Laufrolle 9, so daß ständig für eine ausgezeichnete Schmierung des Kugellagers 10 zu sorgen ist.

Zum Nachschmieren des Kugellagers 10 wird ein axial in den Bolzen 2 hineinführender Schmierkanal 18 vorgesehen, der wenigstens einen radialen Abzweig 19 besitzt. Weiterhin enthält die Hülse 6 wenigstens ein radiales Durchgangsloch 21, das mit dem radialen Abzweig 19 zu fluchten ist. Wenn die Hülse 6 unverdrehbar mit den Innenlaschen 3 und die Bolzen 2 unverdrehbar mit den Außenlaschen 4 verbunden sind, werden die radialen Abzweige 19 und die radialen Durchgangslöcher 21 bei der Montage zweckmäßig so orientiert, daß sie bei geradeaus gestreckter Rollenkette miteinander fluchten. Selbstverständlich enthält die Gleitbuchse 8 ebenfalls ein Durchgangsloch 20; auch dieses ist mit dem radialen Abzweig 19 in Flucht zu bringen. Um das zu vereinfachen, kann die Gleitbuchse 8 unverdrehbar auf dem Bolzen 2 oder an der Hülse 6 befestigt werden. Ein Ausführungsbeispiel einer solchen Gleitbuchse 8 wird beschrieben in DE 195 37 426 C2.

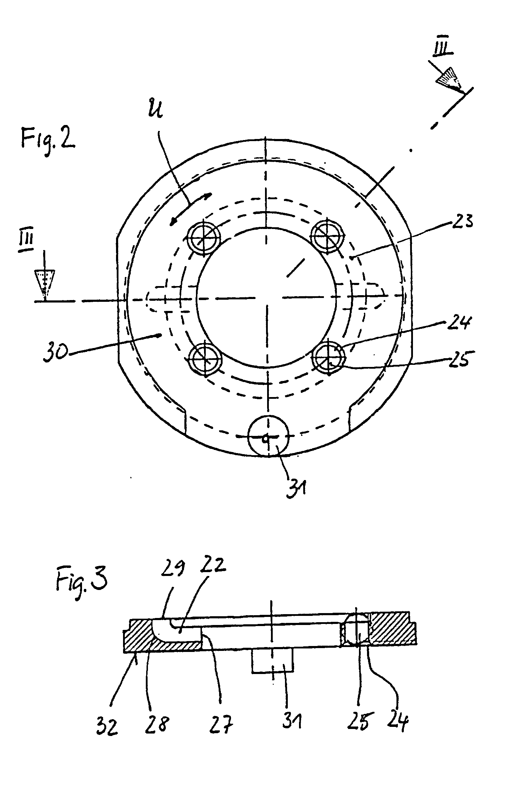

Erfindungsgemäß führt der Schmiermittelweg beginnend im axialen Schmierkanal 18 über den radialen Abzweig 19 und die Löcher 20 und 21 durch eine Schmierrinne 22 (auch Schmierkanal) des Dichtrings 15 zum Kugellagerinnern 13. Der Dichtring 15 wird anhand der Fig. 2 und 3 näher erläutert. Er enthält im Ausführungsbeispiel in einem Ringbereich 23, der axial vor oder über der Längskante des Innenrings 11 liegt, vier durchgehende Bohrungen 24, die je eine Kugel 25 enthalten, wobei der Kugeldurchmesser mindestens gleich der in axialer Richtung gemessenen Dicke des Ringbereichs 23 sein soll. Die Bohrungen 24 sollen in Bolzenumfangsrichtung wenigstens annähernd gleich verteilt sein. Wenn also die Innenlaschen 3 mit ihren Bohrungen 26 auf die Hülsen 6 aufgepreßt und mit Kraft gegen das Kugellager 10 genietet werden, wird diese Kraft über die Kugeln 25 unmittelbar auf den Kugellagerinnenring 11 übertragen und der Dichtring 15 wird dabei nicht bzw. nicht nennenswert belastet. Der Dichtring 15 kann also, wie im Rahmen der Erfindung bevorzugt, aus einem als Dichtmittel geeigneten Kunststoff, der die beim Pressen und Nieten auftretenden Kräfte an sich nicht aufnehmen könnte, bestehen.

Im Bereich zwischen zwei Bohrungen 24 mit Kugeln 25 des Dichtrings 15 wird erfindungsgemäß die Schmierrinne 22 vorgesehen. Die Rinne 22 geht an ihrem Eingang 27 radial aus von dem Durchgangsloch 21 der Hülse 6. Sie führt dann, umgelenkt an einer radialen Barriere 28 am Ausgang 29 unmittelbar in das Kugellagerinnere 13. Der Ausgang 29 liegt im (Ring-)Bereich 30 des Dichtrings 15, welcher das Kugellagerinnere 13 unmittelbar überdeckt bzw. verschließt. Die Barriere 28 sorgt dafür, daß das eingepreßte Schmiermittel in die axiale Richtung zum Kugellagerinnern 13 umgelenkt wird. Im allgemeinen reicht es, das Kugellager 10 auf diese Weise von einer axialen Seite her zu versorgen. Wenn das nicht ausreichen sollte, werden zwei Abzweige 19 von dem Schmierkanal 18 des Bolzens 2 vorgesehen. Auf beiden axialen Enden des Kugellagers 10 können dann Dichtringe 15 erfindungsgemäßer Art installiert werden.

Wenn der Dichtring 15 frei drehbar um die Rollenachse 1 beweglich wäre, müßte die Schmierrinne 22 mit dem radialen Abzweig 19 und den Löchern 20 und 21 in Flucht gebracht werden. Um dieses Fluchten zu ersparen soll der Dichtring 15 einen Nocken 31 besitzen, der eine Verdrehung ausschließt. Der Nocken 31 nach Fig. 2 und 3 befindet sich auf der der Schmierrinne 22 gegenüberliegenden Außenfläche 32 des Dichtrings 15. Er wird beispielsweise in einer entsprechenden Öffnung 33 der Innenlasche 5 eingerastet. Dadurch wird erreicht, daß die Innenlasche 5, die Hülse 6 und der Dichtring 15 unverdrehbar miteinander verbunden sind. Das wiederum ermöglicht es, die Schmierrinne 22 bereits konstruktiv mit dem Abzweig 19 bzw. den Löchern 20 und 21 zu fluchtet.

Es wird eine Rollenkette beschrieben, die in einem Spannrahmen zum Breitstrecken einer textilen Stoffbahn zu verwenden ist. Die Kette besitzt Bolzen mit koaxial darauf gelagerten Hülsen. Koaxial auf den Hülsen befinden sich kugelgelagerte Rollen. Die Kugellager werden axial mit Hilfe von Dichtringen verschlossen. Die Dichtringe sollen so ausgebildet werden, daß sie mechanische Kräfte in axialer Richtung übertragen und zugleich einen Schmierkanal in radialer Richtung aufnehmen können. Sie enthalten daher an einzelnen in Umfangsrichtung gleich verteilten Stellen metallische Einlagen, die die Kräfte übertragen und zwischen denen Platz für einen radialen Schmierkanal bleibt.

### Bezugszeichenliste

- 1 =: Rollenachse
- 2 =: Bolzen
- 3 =: Innenglied
- 4 =: Außenglied
- 5 =: Innenlasche
- 6 =: Hülse
- 7 =: Außenlasche
- 7a =: Längsende von 7
- 8 =: Gleitbuchse
- 9 =: Laufrolle
- 10 =: Kugellager
- 11 =: Innenring (10)
- 12 =: Außenring (10)
- 13 =: Kugellagerinneres
- 14 =: Kugel
- 15 =: Dichtring
- 16 =: Federblatt
- 17 =: Schraubbolzen
- 18 =: Schmierkanal
- 19 =: radialer Abzweig von 18
- 20 =: Durchgangsloch in 8
- 21 =: Durchgangsloch in 6
- 22 =: Schmierrinne
- 23 =: Ringbereich (Fig. 2)
- 24 =: Bohrung
- 25 =: Kugel
- 26 =: Bohrung (3)
- 27 =: Eingang (22)
- 28 =: Barriere (3)
- 29 =: Ausgang (22)
- 30 =: Ringbereich über 13
- 31 =: Nocken
- 32 =: Dichtringaußenfläche
- 33 =: Öffnung von 5 für 30
- U =: Bolzenumfangsrichtung

## Patentansprüche

1. Rollenkette zum kontinuierlichen Führen und/oder Breitstrecken einer textilen Stoffbahn in einer Stoffbahnspannmaschine mit verbunden über Kettengelenke abwechselnd aufeinanderfolgenden Innen- und Außengliedern (3, 4),
a) wobei jedes Innenglied (3) aus zwei Innenlaschen (5) sowie zwei die Innenlaschen (5) miteinander verbindenden Hülsen (6) und jedes Außenglied (4) aus zwei Außenlaschen (7) sowie zwei die Außenlaschen (7) miteinander verbindenden Bolzen (2) besteht,
b) wobei jede Hülse (6) koaxial drehbar auf dem zugehörigen Bolzen (2) gelagert ist,
c) wobei koaxial außen auf der Hülse (6) eine Laufrolle (9) als Außenring (12) eines über einen durch das Bolzeninnere führenden Schmierkanal (18) zu versorgenden Kugellagers (10) vorgesehen ist,
d) wobei das Kugellager (10) einen mit der Hülse (6) gekoppelten Innenring (11) und je einen axial anliegenden, koaxialen Dichtring (15) besitzt und
e) wobei die Innenlaschen (5) über einen den Dichtring (15) kräftemäßig überbrückenden Abstandhalter axial gegen den Kugellager-Innenring (11) unverdrehbar auf die Hülse (6) aufgepreßt sind,
**dadurch gekennzeichnet**,
f) daß der Dichtring (15) im wesentlichen aus Kunststoff besteht und unverdrehbar mit der angrenzenden Innenlasche (5) gekoppelt ist,
g) daß der Abstandhalter in Form einzelner in der Bolzenumfangsrichtung (U) annähernd gleich verteilter, metallischer Einlagen (25) in den Dichtring (15) integriert ist,
h) daß jede Einlage (25) axial annähernd durch den Dichtring (15) hindurchreicht, wobei der in der Ringebene gemessene Gesamtquerschnitt aller Einlagen (25) klein gegen die Ringfläche ist, und
i) daß die dem Kugellager (10) zugewandte Dichtringfläche mindestens eine Schmierrinne (22) aufweist, die den Bolzenschmierkanal (18) mit radialem Abzweig (19) und ein damit zur Deckung gebrachtes Schmierloch (21) der Hülse (6) mit dem Kugellagerinnern (13) verbindet.

2. Rollenkette nach Anspruch 1, **dadurch gekennzeichnet, daß** die Einlagen (25) eine Härte in der Größenordnung der Härte von Innenlasche (5) und Kugellagerinnenring (11) besitzen.

3. Rollenkette nach Anspruch 1 oder 2, **dadurch gekennzeichnet, daß** der Schmiermittelweg von radialem Abzweig (19) des Bolzen-Schmierkanals (18) zum radialen Durchgangsloch (21) der Hülse (6) durch ein Durchgangsloch (20) einer unverdrehbar zwischen Bolzen (2) und Hülse (6) installierten Gleitbuchse (8) hindurchführt.

4. Rollenkette nach mindestens einem der Ansprüche 1 bis 3, **dadurch gekennzeichnet, daß** in den Dichtring (15) Kugeln als Einlagen (25) integriert sind.

5. Rollenkette nach mindestens einem der Ansprüche 1 bis 4, **dadurch gekennzeichnet, daß** drei, vorzugsweise vier, Einlagen (25) in jedem Dichtring (15) vorgesehen sind.

6. Rollenkette nach mindestens einem der Ansprüche 1 bis 5, **dadurch gekennzeichnet, daß** im Dichtring (15) zwei diametral einander gegenüberliegende Schmierrinnen (22) vorgesehen sind.

7. Rollenkette nach Anspruch 6, **dadurch gekennzeichnet, daß** die Schmierrinne (22) radial in Bezug auf die Bolzenachse (1) verläuft.

8. Rollenkette nach Anspruch 6 oder 7, **dadurch gekennzeichnet, daß** die im Prinzip radial nach außen führende Schmierrinne (22) eine Umlenkbarriere (28) in einen Ringbereich (30) etwa axial über dem (ringförmigen) Kugellagerinnern (13) besitzt.

9. Rollenkette nach mindestens einem der Ansprüche 1 bis 8, **dadurch gekennzeichnet, daß** der Dichtring (15) mit Hilfe eines Nockens (31) drehfest mit der angrenzenden Innenlasche (5) verbunden ist.

## Claims

1. A roller chain for the continual guidance of a textile fabric web and/or its extension to its full width in a fabric web stenter frame with alternately successive inner and outer members (3, 4) connected via chain links,
a) wherein each inner member (3) consists of two inner plates (5) and also two bushes (6) connecting the inner plates (5) to each other and each outer member (4) consists of two outer plates (7) and also two bolts (2) connecting the outer plates (7) to each another,
b) wherein each bush (6) is mounted in coaxially rota table manner on the associated bolt (2),
c) wherein a roller (9) as an outer ring (12) of a ball bearing (10) to be supplied via a lubrication channel (18) passing through the interior of the bolt is provided coaxially on the outside of the bush (6),
d) wherein the ball bearing (10) has an inner ring (11) coupled with the bush (6) and an axially adjacent, coaxial sealing ring (15) and
e) wherein the inner plates (5) are pressed axially against the inner ring (11) of the ball bearing without twisting onto the bush (6) via a spacer which as far as force is concerned spans the sealing ring (15),
**characterised**
f) **in that** the sealing ring (15) is substantially made from plastic and is non-twistably coupled with the adjacent inner plate (5),
g) in that the spacer is integrated into the sealing ring (15) in the form of individual metal inserts (25) distributed roughly equally in the circumferential direction of the bolt (U),
h) in that each insert (25) extends axially roughly through the sealing ring (15), the overall cross section of all inserts (25) which is measured in the ring plane being small compared with the ring face, and
i) in that the sealing ring face close to the ball bearing (10) comprises at least one lubrication channel (22), which connects the lubrication channel (18) of the bolt to the radial branch (19) and a lubrication hole (21) of the bush (6) made to overlap it to the interior of the ball bearing (13).

2. A roller chain according to Claim 1,
**characterised in that** the inserts (25) have a hardness in the order of magnitude of the hardness of inner plate (5) and ball bearing inner ring (11).

3. A roller chain according to Claim 1 or 2,
**characterised in that** the lubricant path from the radial branch (19) of the bolt lubrication channel (18) to the radial through-hole (21) of the bush (6) passes through a through-hole (20) of a guide bush (8) installed non-twistably between bolt (2) and bush (6).

4. A roller chain according to at least one of Claims 1 to 3,
**characterised in that** balls are integrated as inserts (25) into the sealing ring (15).

5. A roller chain according to at least one of Claims 1 to 4,
**characterised in that** three, preferably four, inserts (25) are provided in each sealing ring (15).

6. A roller chain according to at least one of Claims 1 to 5,
**characterised in that** two diametrically opposite lubrication channels (22) are provided in the sealing ring (15).

7. A roller chain according to Claim 6,
**characterised in that** the lubrication channel (22) runs radially with respect to the bolt axis (1).

8. A roller chain according to Claim 6 or 7,
**characterised in that** the lubrication channel (22) which in principle leads radially outwards has a deflection barrier (28) in an annular region (30) roughly axially over the (annular) ball bearing interior (13).

9. A roller chain according to at least one of Claims 1 to 8,
**characterised in that** the sealing ring (15) is connected by means of a cam (31) in a rotationally secure manner to the adjacent inner plate (5).

## Revendications

1. Chaîne à rouleaux pour guider et/ou mettre à largeur en continu une bande d'étoffe textile dans une rame continue ou, en d'autres termes, une machine à tendre pour bandes d'étoffe qui comprend des éléments internes et externes (3, 4) successifs en alternance connectés au moyen d'assemblages articulés de chaîne
a) dans laquelle chaque élément interne (3) se compose de deux attaches internes (5) et deux douilles (6) qui connectent les attaches internes (5) entre elles et chaque élément externe (4) se compose de deux attaches externes (7) et deux boulons (2) qui connectent les attaches externes (7) entre elles,
b) dans laquelle chaque douille (6) est logée coaxialement à rotation sur le boulon associé (2),
c) dans laquelle un galet de roulement (9) est prévu coaxialement à l'extérieur sur la douille (6) sous forme de bague externe (12) d'un roulement à billes (10) à lubrifier par l'intermédiaire d'un canal de lubrification (18) qui traverse l'intérieur du boulon,
d) dans laquelle le roulement à billes (10) possède une bague interne (11) accouplée avec la douille (6) et respectivement une bague d'étanchéité coaxiale (15) adjacente axialement et
e) dans laquelle les attaches internes (5) sont appuyées axialement sans possibilité de rotation sur la douille (6) contre la bague interne (11) de roulement à billes au moyen d'une entretoise qui chevauche avec effet de force la bague d'étanchéité (15),
**caractérisé en ce que**
f) la bague d'étanchéité (15) se compose essentiellement de matière plastique et est accouplée sans possibilité de rotation avec l'attache interne adjacente (5),
g) l'entretoise est intégrée dans la bague d'étanchéité (15) sous forme d'inserts métalliques (25) répartis à peu près uniformément dans la direction (U) de la périphérie des boulons,
h) chaque insert (25) traverse la bague d'étanchéité (15) à peu près axialement, la section globale en coupe transversale de tous les inserts (25) mesurée dans le plan de la bague étant faible par rapport à la superficie de la bague, et
i) la surface de bague d'étanchéité tournée vers le roulement à billes (10) comporte au moins un conduit de lubrification (22) qui relie l'intérieur (13) du roulement à billes avec le canal de lubrification (18) ménagé dans le boulon et comportant une ramification (19) et avec un orifice de lubrification (21) de la douille (6) amené en recouvrement avec cette ramification.

2. Chaîne à rouleaux selon la revendication 1, **caractérisée en ce que** la dureté des inserts (25) est du même ordre de grandeur que celle d'une attache interne (5) et d'une bague interne (11) de roulement à billes.

3. Chaîne à rouleaux selon la revendication 1 ou 2, **caractérisée en ce que** le trajet de lubrifiant à partir de la ramification radiale (19) du canal de lubrification (18) ménagé dans le boulon jusqu'à l'orifice de passage radial (21) de la douille (6) traverse un orifice de passage (20) d'une fourrure de glissement (8) installée sans possibilité de rotation entre le boulon (2) et la douille (6).

4. Chaîne à rouleaux selon l'une quelconque des revendications précédentes, **caractérisée en ce que** des billes sont intégrées comme inserts (25) dans la bague d'étanchéité (15).

5. Chaîne à rouleaux selon l'une quelconque des revendications précédentes, **caractérisée en ce que** trois, de préférence quatre, inserts (25) sont prévus dans chaque bague d'étanchéité (15).

6. Chaîne à rouleaux selon l'une quelconque des revendications précédentes **caractérisée en ce que** deux conduits de lubrification (22) diamétralement opposées sont prévus dans la bague d'étanchéité (15).

7. Chaîne à rouleaux selon la revendication 6, **caractérisée en ce que** le trajet du conduit de lubrification (22) est radial par rapport à l'axe (1) de boulon.

8. Chaîne à rouleaux selon la revendication 6 ou 7, **caractérisée en ce que** le conduit de lubrification (22) qui mène en principe radialement vers l'extérieur comporte une barrière de déviation (28) dans une zone annulaire (30) à peu près axialement au dessus de l'intérieur (annulaire) (13) du roulement à billes.

9. Chaîne à rouleaux selon l'une quelconque des revendications précédentes, **caractérisée en ce que** la bague d'étanchéité (15) est attachée, sans possibilité de rotation, à l'attache interne adjacente (5) au moyen d'un taquet (31).
